# EUROPÄISCHE PATENTSCHRIFT

(11) **EP 2 552 565 B1**
(45) Veröffentlichungstag und Bekanntmachung des Hinweises auf die Patenterteilung: **10.05.2017**
(21) Anmeldenummer: 11715150.6
(22) Anmeldetag: 14.03.2011
(51) Int. Cl.: B01D 33/31, B01D 35/30, B01D 63/16

(54) **VORRICHTUNG ZUM FILTRIEREN VON FLÜSSIGKEITEN**
DEVICE FOR FILTERING LIQUIDS
DISPOSITIF POUR LA FILTRATION DE LIQUIDES

(30) Priorität: 29.03.2010 AT 4962010
(43) Veröffentlichungstag der Anmeldung: 06.02.2013
(73) Patentinhaber: Pantreon GmbH, 4810 Gmunden (AT)
(72) Erfinder: LÜER, Andreas, 4810 Gmunden (AT)
(74) Vertreter: Patentanwaltskanzlei Hübscher
(86) Internationale Anmeldenummer: PCT/AT2011/000129
(87) Internationale Veröffentlichungsnummer: WO 2011/120061

(56) Entgegenhaltungen:
- EP-A1- 0 577 854
- US-A- 3 438 497
- US-A- 3 583 567
- US-A1- 2006 041 216

## Beschreibung

### Technisches Gebiet

Die Erfindung bezieht sich auf eine Vorrichtung zum Filtrieren von Flüssigkeiten, mit einem Behälter, Einrichtungen zum Einleiten einer zu filtrierenden Flüssigkeit in den Behälter, einem Behälterauslaß für unfiltriert aus dem Behälter abzuleitende Flüssigkeit und wenigstens einem um die Behälterachse rotierend antreibbaren Rotor mit einer in einer Stirnwand gelagerten Hohlwelle und einer daran befestigten Tragvorrichtung für mit einem Freiraum zur Behälterachse angeordnete oder um die eigene Achse drehende Filterelemente, deren inneres über die Tragvorrichtung und die Hohlwelle aus dem Behälter als Ableitung für filtrierte Flüssigkeit ausmündet, wobei der Behälterinnenradius der Innenwandung des Behälterumfangsmantels in Behälterumfangsrichtung unter Ausbauchung der zylinderförmigen Innenwandung zwischen zwei Minima bis zu einem Maximum vergrößert ist.

### Stand der Technik

Derartige bekannte Vorrichtungen (EP 577 854 B1) umfassen einen Rotor als Rührkörper, deren Rührelemente von rohrförmigen, vertikal angeströmten Filterelementen gebildet werden. Damit wird das Hauptproblem bei der Membranfiltration von Flüssigkeiten, nämlich die Bildung von Deckschichten auf der Membranoberfläche und die dadurch verursachte Verkleinerung der effektiven Filterfläche und Verblockung der Membranporen, verhindert bzw. reduziert. Diese Deckschichten entstehen zumeist durch Agglomeration von an den Membranporen abgetrennten Feststoffteilchen und deren Aufkonzentration im Bereich der Membranoberfläche. Dieser Effekt lässt sich während eines kontinuierlichen Filtrationsprozesses mit derartigen Vorrichtungen dadurch vermeiden, daß durch die Rotation der Filterelemente im Behälter auf den Membranoberflächen turbulente Querströmungen und somit Scherkräfte erzeugt werden, die eine laufende mechanische Abreinigung der Filterelemente und eine laufende Durchwirbelung der zu filtrierenden Flüssigkeiten bewirken.

Diese Vorrichtungen sind dafür geeignet hohe Scherraten und Turbulenzen zu erzielen. Das Kernstück ist ein abgeschlossener Filterbehälter, in dem ein oder mehrere rotierende Drehkränze von Motoren angetrieben werden. Die filtrierten Flüssigkeiten werden ausgehend von rohrförmigen aber auch scheibenförmigen od. dgl. Filterelementen (AT 503 567 A) im Rotor gesammelt und über Rotorspeichen, Rotornabe und die Hohlwelle aus dem Innenraum des Behälters abgeführt. Die Filtermodule sind auf dem Rotor montiert und gegen im Behälter vorherrschende hohe Drücke abgedichtet. Allerdings kommt es bei einer Rotation größerer horizontal ausgerichteter und angeströmter Filterflächen über den Rotorradius zu einer extremen Streuung in den Überströmungsbedingungen, des Transmembrandruckes und zu unerwünschten Scher- bzw. Druckspitzen.

Bei einer Rotation der Filterelemente im Behälter ist es erforderlich die Flüssigkeit an einem Mitdrehen mit den Filterelementen zu behindern, um die für ein Abreinigen des Filters notwendige Relativgeschwindigkeit zwischen Flüssigkeit und Filteroberfläche zu erzielen. Dies wird meist mit im Behälter oder an der Behälterinnenwand angeordneten Strombrechern erreicht, die aber unnötige Turbulenzen und Scher- bzw. Druckspitzen abseits der Filterflächen verursachen (US 3 583 567 A, EP 0 577 854 A1 und US 3 438 497 A).

Zum Filtern konzentriert sich die Flüssigkeit im Behälter im Betrieb stetig auf, da das Filtrat/Permeat kontinuierlich durch die Filterelemente abfließt und dem Druckabfall entsprechend neue Flüssigkeit zugeführt wird. Im Betrieb kann diese Art der Aufkonzentrierung so lange fortgesetzt werden, bis die Viskosität der Lösung durch Anstieg des Feststoffgehaltes einen Maximalwert erreicht hat, bis zu dem die Durchflussmenge noch wirtschaftlich ist. Das Suspensionskonzentrat wird dann über den Behälterauslaß entleert oder während des Betriebes kontinuierlich abgelassen. Um bei derartigen Vorrichtungen einen kontinuierlichen Betrieb der Vorrichtung zu ermöglichen wurde bereits vorgeschlagen die Innenwandung des Behälterumfangsmantels unter Ausbildung einer Leiteinrichtung für die Flüssigkeit entlang der Behälterachse gegen den Behälterauslaß hin zu erweitern (AT 503 567 A).

### Darstellung der Erfindung

Der Erfindung liegt die Aufgabe zugrunde eine Vorrichtung der Eingangs geschilderten Art zu schaffen, welche die vorgenannten Nachteile vermeidet und mit einfachen Mitteln eine verbesserte Filterleistung gestattet, wobei insbesondere mit möglichst geringem Aufwand über die gesamte Filterfläche eine turbulente Strömung erzielt werden soll und turbulente Strömungen außerhalb der Filterflächen möglichst verringert werden sollen.

Die Erfindung löst diese Aufgabe dadurch, dass die Ausbauchung eine die Flüssigkeit gegen die Filterelemente leitende Leiteinrichtung bildet, wobei die Ausbauchung der Innenwandung des Behälterumfangsmantels einen tragflächenprofilähnlichen Querschnitt aufweist, wobei der Behälterumfangsquerschnitt der Innen-wandung des Behälterumfangsmantels in wenigstens zwei, je eine Aus-bauchung bildende Ringsegmente unterteilt ist und sich der Behälterinnenradius in Behälterumfangsrichtung wenigstens eines, vorzugsweise jedes, Ringsegmentes zwischen den beiden Minima bis zum Maximum vergrößert, wobei die Ausbauchungen der Innenwandung des Behälterumfangsmantels die Flüssigkeit gegen die Filterelemente leitende Leiteinrichtungen bilden und einen tragflächenprofilähnlichen Querschnitt aufweisen, wobei jedes Ringsegment wenigstens drei Abschnitte aufweist, einen Beruhigungsabschnitt mit zumindest annähernd gleichem Behälterinnenradius, einen Impulsabschnitt, mit kleinem Krümmungsradius und einen mit einem gegen das Behälterinnere weisenden Endabschnitt, sowie einem dazwischen Beruhigungsabschnitt und Impulsabschnitt liegenden Übergangsabschnitt und wobei im Bereich der Behälterachse zur Verbesserung der Umspülung der Filterelemente ein wenigstens eine Leiteinrichtung für das Fluid aufweisender Rotor oder Stator angeordnet ist..

Die erfindungsgemäßen, sich insbesondere über die Behälterhöhe erstreckenden Leiteinrichtungen, vermeiden übermäßige turbulente Strömungen außerhalb des Rotationsbereiches der Filterelemente dadurch, dass die Flüssigkeit in diesem Bereich zunächst ungestört geführt, verzögert und dabei beruhigt und anschließend unter Aufprägung keiner bis möglichst geringer Turbulenzen beschleunigt und direkt gegen die Filterelemente, also gegen das Behälterinnere hin geleitet werden. Mit der Erfindung ist es möglich den durch die Rotation der Filterelemente in Rotationsrichtung und durch die Zentrifugalkräfte nach außen gelenkten Flüssigkeitsstrom sehr effizient zu den Filterflächen zurückzuleiten und dabei die Strömungsgeschwindigkeit der Flüssigkeit im Verhältnis zur Umlaufgeschwindigkeit der rotierenden Filterelemente zu reduzieren. Damit kann eine erhöhte Relativgeschwindigkeit zwischen den rotierenden Filterelementen und der strömungstechnisch gebremsten Flüssigkeit erzielt werden. Ziel der Stromführung ist es die Turbulenzen der Strömung innerhalb des Bereichs der Filterelemente möglichst hoch zu halten, während diese außerhalb der Filtermodule, im Sinne hoher Energie-Effizienz für den Rotor-Antrieb, möglichst gering zu halten sind. Damit können auch mögliche Veränderungen in der Molekülstruktur und der Aggregatzustände der zu filtrierenden Flüssigkeit durch mechanischen Stress vermieden werden. Die beschriebenen Ausbauchungen der Innenwandung des Behälterumfangsmantels weisen aus strömungstechnischen Gründen einen tragflächenprofilähnlichen Querschnitt auf, der sich ausgehend von einem zylinderförmigen Umfangsmantel über einen bestimmten Umfangsabschnitt eben nach außen ausbaucht.

In einer möglichen Ausgestaltung der Erfindung kann der Behälter, insbesondere im Bereich von oberer und/oder unterer Mantelstirnwand zumindest bereichsweise strömungsoffen für das zu filtrierende Fluid ausgebildet und die Vorrichtung in eine Art Überbehälter, der auch ein Gewässer oder Strom sein kann, eingesetzt sein, wobei in der Ableitung für filtrierte Flüssigkeit zur Verbesserung der Filterleistung der Filterelemente ein Unterdruck aufgebaut werden kann.

Der Behälterumfangsquerschnitt der Innenwandung des Behälterumfangsmantels ist in wenigstens zwei Ringsegmente unterteilt und vergrößert sich der Behälterinnenradius in Behälterumfangsrichtung wenigstens eines, vorzugsweise jedes, Ringsegmentes zwischen den beiden Minima bis zum Maximum. Im Bereich der Ausbauchung entstehen aufgrund der entgegen Rotationsrichtung angeströmten Flächen erhöhte Drücke. Die Anzahl der um den Behälterumfang angeodneten Ringsegmente und der Geometrie bzw. der Abmessungen der Ausbauchungen hängen vom jeweiligen Einsatzzweck der Vorrichtung ab und bleibt dem Fachmann überlassen.

Besonders vorteilhafte Strömungsverhältnisse ergeben sich, wenn jedes Ringsegment wenigstens drei Abschnitte aufweist, einen Beruhigungsabschnitt mit zumindest annähernd gleichbleibendem Behälterinnenradius, einem Impulsabschnitt mit kleinem Krümmungsradius und einem gegen das Behälterinnere weisenden Endabschnitt sowie einem dazwischen liegenden Übergangsabschnitt. Damit werden insbesondere zusätzliche Turbulenzen verursachende Sprünge oder Knicke in der Leiteinrichtung vermieden.

Um die Umspülung der Filterelemente weiter zu verbessern und auch im Bereich geringerer Umfangs- und Zentrifugalkräfte turbulente Verhältnisse beim Umspülen der Filteroberflächen zu schaffen, wird vorgeschlagen, dass im Bereich der Behälterachse ein wenigstens eine Leiteinrichtung für die Flüssigkeit aufweisender Rotor oder Stator angeordnet ist. Dazu kann der Rotoraußenradius der Rotoraußenwandung in Rotorumfangsrichtung unter Einbuchtung der Außenwandung zwischen zwei Maxima bis zu einem Minimum verkleinert sein bzw. kann der Rotor über seinen Umfang in wenigstens zwei Segmente unterteilt sein und sich der Rotoraußenradius in Rotorumfangsrichtung wenigstens eines, vorzugsweise jedes, Segmentes zwischen den beiden Maxima bis zum Minimum verkleinern.

Vorzugsweise weist jedes Segment wiederum wenigstens drei Abschnitte auf, einen Beruhigungsabschnitt mit zumindest annähernd gleichem Rotoraußenradius, einen Impulsabschnitt mit kleinem Krümmungsradius und mit einem gegen das Behälteräußere weisenden Endabschnitt sowie einem zwischen Beruhigungsabschnitt und Impulsabschnitt liegenden Übergangsabschnitt. Die beschriebenen Einbuchtungen der Außenwandung des Behälterumfangsmantels können wiederum einen tragflächenprofilähnlichen, aber naturgemäß entgegengesetzt gekrümmten Querschnitt aufweisen, der ausgehend von einem zylinderförmigen Rotormantel diesen über einen bestimmten Umfangsabschnitt eben nach innen einbuchtet.

Grundsätzlich rotieren die Filterelemente bei gattungsgemäßen Vorrichtungen im Behälter um die Behälterhochachse entlang von ringförmig um die Behälterachse geführten Bahnen. Zur Verbesserung der Filterwirkung auf achsnäheren Bahnen kann es vorteilhaft sein, wenigstens zwei um die Behälterachse gegensinnig oder mit verschiedenen Drehzahlen antreibbare und Filterelemente tragende Rotoren vorzusehen. Mit dieser Maßnahme ist eine Angleichung der turbulenten Strömungen auf behälterachsnahen und -fernen Bewegungsbahnen der Filterelemente möglich.

Grundsätzlich kann die im Behälter zurückbleibende schwere Phase im Bereich des Behältermantels oder im Bereich der Mantelstirnflächen, also Behälterober- und/oder -unterseitig aus dem Behälter abgeleitet werden. Soll mit der Erfindung ein kontinuierlicher Betrieb möglich sein, empfiehlt es sich, wenn der Behälterauslass wenigstens eine im Behälterumfangsmantel im Bereich der Ausbauchung angeordnete Auslassöffnung umfasst, die vorzugsweise in Behälterumfangsrichtung weisend an die Ausbauchung anschließt. Schwerere Moleküle (schwere Phasen) werden dabei im Auslass gefangen und sammeln sich im Auslasskanal unter Aufkonzentrierung, an. Leichtere Moleküle werden von der Leiteinrichtung wieder gegen das Behälterzentrum geleitet. Damit ist insbesondere im kontinuierlichen Betrieb der Vorrichtung eine verbesserte Aufkonzentrationsrate möglich. Ist im Auslasskanal eine gewünschte (gemessene) Aufkonzentrationsrate erreicht, so kann die hoch aufkonzentrierte Flüssigkeit kontinuierlich oder zyklusweise aus dem Behälter abgeführt werden. Gleichermaßen kann dem Behälter zu filtrierende Flüssigkeit zugeführt werden.

Zur Unterbindung und Vermeidung von Behälterachsparallelen Strömungen, also von Querströmungen, im Mantelbereich kann wenigstens der Ausbauchung wenigstens eine in Behälterumfangsrichtung ausgerichtete und sich über zumindest einen Teil der Ausbauchung erstreckende und in die Ausbauchung eingesetzte Leiteeinrichtung für die Flüssigkeit zugehören. Bei Bedarf erstrecken sich dese Leiteinrichtungen auch um den vollen Behälterinnenmantel. Besonders bevorzugt kommen in einer Anlage unterschiedlich lange Leitbleche, beispielsweise kurze, mittellange und lange, zum Einsatz, die in einer strömungstechnisch optimierten Abfolge in der jeweiligen Ausbauchung vorgesehen sind. Diese Leiteinrichtungen, insbesondere Leitbleche, können in äquivalenter Weise auch am im Bereich der Behälterachse vorgesehenen Stator oder Rotor angeordnet sein.

Für eine weitere Verbesserung des an den Filterelementen vorherrschenden Strömungsbildes in eine gewünschte Richtung können die Filterelemente trapezoidförmige Scheiben sein. Dies hat den Vorteil, dass der unerwünschte übermäßige Freiraum zwischen benachbarten Filterelementen verringert und die effektive nutzbare Filterfläche in einer Vorrichtung erhöht werden kann. Um dabei nur auf eine Filterform zurückgreifen zu müssen, die sich für kleinere und größere um die Behälterachse führende zu realisierende Bahnen gleichermaßen eignet empfiehlt sich eine trapezoide Form, bei der die seitlichen Stirnflanken der Filterelemente nicht konstant über die Filterhöhe zueinander geneigt sind, sondern die Neigung zum inneren Trapezschenkel stetig oder stufenweise hin zunimmt. Besonders dünne aber dennoch mechanisch feste und ausreichen große Strömungskanäle für filtrierte Flüssigkeiten aufweisende Filterelemente werden geschaffen, wenn die Scheiben eine Drainageleitungen ausbildende diatomeenartig, also nach Art einer Kieselalge, aufgebaute Scheibenseele umfasst, die ober- und unterseitig mit einem Filterelement, insbesondere einer Folie, abgedeckt ist. Die Verwendungsmöglichkeit der vorgeschilderten Filterelemente beschränkt sich nicht auf die gegenständliche Vorrichtung, sondern erstreckt sich auch auf Vorrichtungen aus dem Stand der Technik.

### Kurze Beschreibung der Zeichnung

In der Zeichnung ist die Erfindung anhand eines Ausführungsbeispieles schematisch dargestellt. Es zeigen:
- Fig. 1: Eine Erfindungsgemäße Vorrichtung in teilgeschnittener Draufsicht,
- Fig. 2: ein vergrößertes Filterelement aus Fig. 1 in Draufsicht,
- Fig. 3 bis 6: Konstruktionsvarianten der Vorrichtung aus Fig. 1 in teilgeschnittener Draufsicht,

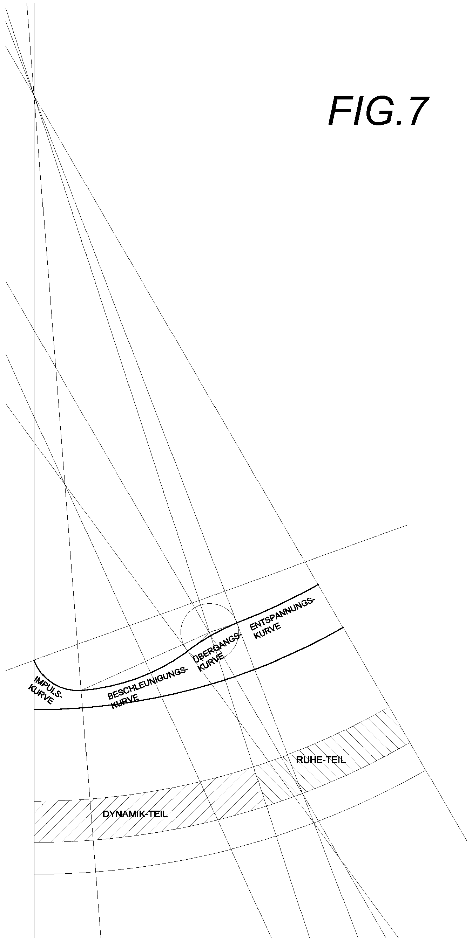

- Fig. 7: einen vergrößerten Ausschnitt des Behältermantels aus Fig. 1,
- Fig. 8: einen vergrößerten Ausschnitt des zentralen Rotors aus Fig. 1,
- Fig. 9: eine Mehrzahl an zu einem Filterpaket zusammengefasster Filterelemente in Stirnansicht,
- Fig. 10 und 11: eine Variante eines Ausschnitt eines Behältermantels aus Fig. 7,
- Fig. 12: einen Ausschnitt aus Fig. 11 im Behälterlängsschnitt und

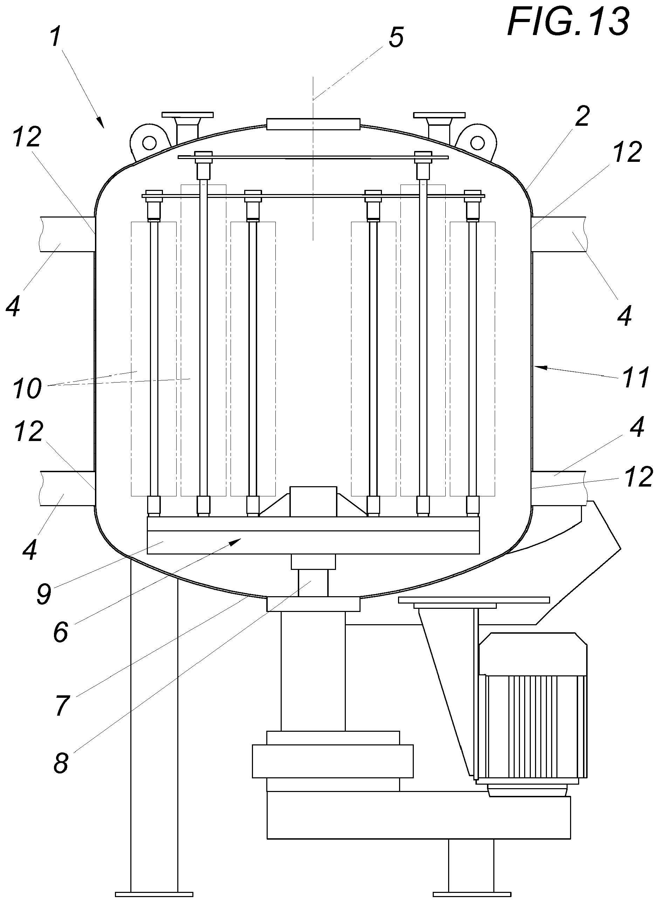

- Fig. 13: eine Vorrichtung gemäß dem Stand der Technik.

### Weg zur Ausführung der Erfindung

Eine Vorrichtung 1 zum Filtrieren von Flüssigkeiten umfasst einen Behälter 2, nicht näher dargestellte Einrichtungen zum Einleiten einer zu filtrierenden Flüssigkeit in den Behälter 2, die üblicherweise im Bereich des Behälterbodens in den Behälter 2 eingeleitet wird, einen Behälterauslaß 4 für unfiltriert aus dem Behälter 2 abzuleitende Flüssigkeit und einen um die Behälterachse 5 rotierend antreibbaren Rotor 6 mit einer in der unteren Stirnwand 7 gelagerten Hohlwelle 8 und einer daran befestigten Tragvorrichtung 9 für mit radialem Abstand zur Behälterachse 5 angeordnete Filterelemente 10. Das innere der Filterelemente 10 mündet über die Tragvorrichtung 9 und die Hohlwelle 8 aus dem Behälter 2 als Ableitung für filtrierte Flüssigkeit. Unfiltrierte Flüssigkeit wird im Behälterauslass 4 über die Auslassöffnung 12 zugeleitet.

Gemäß der Erfindung ist der Behältermantel 11 derart ausgebildet, dass der Behälterinnenradius 12 der Innenwandung 11 des Behälterumfangsmantels in Behälterumfangsrichtung unter Ausbauchung der Innenwandung zwischen zwei Minima bis zu einem Maximum vergrößert, welche Ausbauchung eine die zu filtrierende Flüssigkeit gegen die Filterelemente 10 leitende Leiteinrichtung bildet.

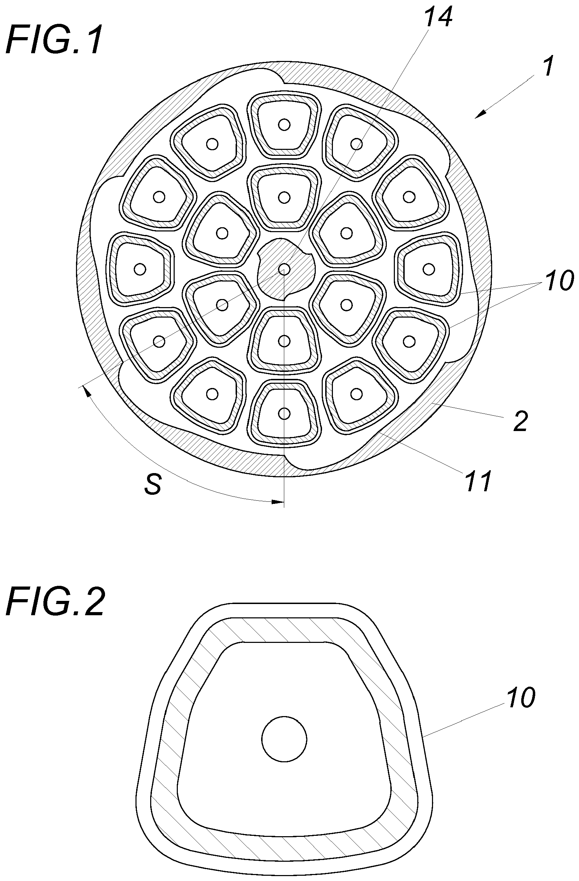

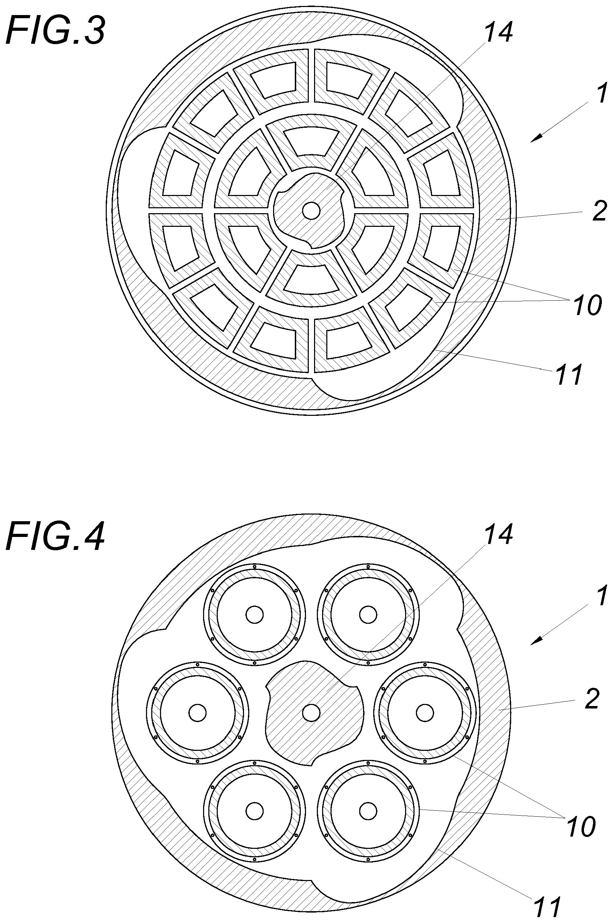

Dabei ist der Behälterumfangsquerschnitt der Innenwandung des Behälterumfangsmantels 11 in wenigstens zwei Ringsegmente unterteilt und vergrößert sich der Behälterinnenradius 12 in Behälterumfangsrichtung eines jeden Ringsegmentes zwischen den beiden Minima bis zum Maximum. Im Ausführungsbeispiel nach Fig. 1 sind beispielsweise sechs und in dem Ausführungsbeispiel nach den Fig. 3 bis 6 drei Ringsegmente über den Behälterumfang gleichverteilt angeordnet. Die dargestellten Ausbauchungen in der Innenwandung des Behälterumfangsmantels 11 weisen dabei einen tragflächenprofilähnlichen Querschnitt auf. Wie insbesondere Fig. 4 entnommen werden kann, weist jedes Ringsegment S wenigstens drei Abschnitte auf, einen Beruhigungsabschnitt, als Entspannungskurve bezeichnet mit zumindest annähernd gleichem Behälterinnenradius 12, einen Impulsabschnitt, dargestellt als Impulskurve mit kleinem Krümmungsradius und einem gegen das Behälterinnere weisenden Endabschnitt sowie einen dazwischenliegenden, als Beschleunigungskurve bzw. Übergangskurve dargestellten, Übergangsabschnitt, in dem die Ausbuchtung stärker gekrümmt ist als im Bereich des Beruhigungsabschnitts aber schwächer als im Bereich des Impulsabschnitts.

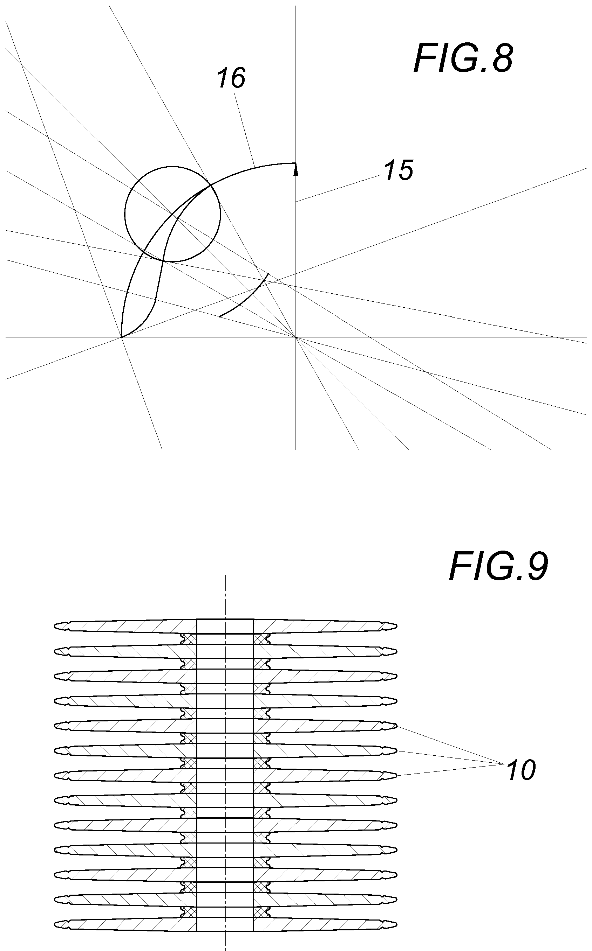

Zur Verbesserung der Umströmung der näher bei der Behälterachse 5 liegenden Filterelemente 10 ist im Bereich der Behälterachse 5 ein wenigstens eine Leiteinrichtung für das Fluid aufweisender Rotor 14 oder Stator angeordnet, dessen Rotoraußenradius 15 der Rotoraußenwandung 16 in Rotorumfangsrichtung unter Einbuchtung der Außenwandung zwischen zwei Maxima bis zu einem Minimum verkleinert ist (siehe beispielsweise Fig. 8). An Stelle des Rotors 14 könnte auch ein Stator vorgesehen sein. In dem dargestellten Ausführungsbeispiel nach den Fig. 1 und 3 bis 6 ist der Rotor 14 über seinen Umfang in drei Segmente unterteilt, wobei sich der Rotoraußenradius in Rotorumfangsrichtung eines jeden der drei Segmente zwischen den beiden auf einem Zylindermantel liegenden Maxima bis zu einem gegenüber diesen Maximal eingezogenen Minimum verkleinert. Dadurch werden eine Art Schaufelflächen am Rotor ausgebildet, die gezielt zu filtrierende Flüssigkeit zu den Filterelementen 10 verlagert. In ähnlicher Weise wie die Ausbuchtungen am Behälterinnenmantel 11 weist jedes Segment des Rotors 14 wenigstens drei Abschnitte auf, die einen Beruhigungsabschnitt mit zumindest gleichem Rotoraußenradius, einem Impulsabschnitt mit kleinerem Krümmungsradius und einem gegen das Behälteräußere weisenden Endabschnitt sowie einen dazwischenliegenden Übergangsabschnitt umfasst (Fig. 8).

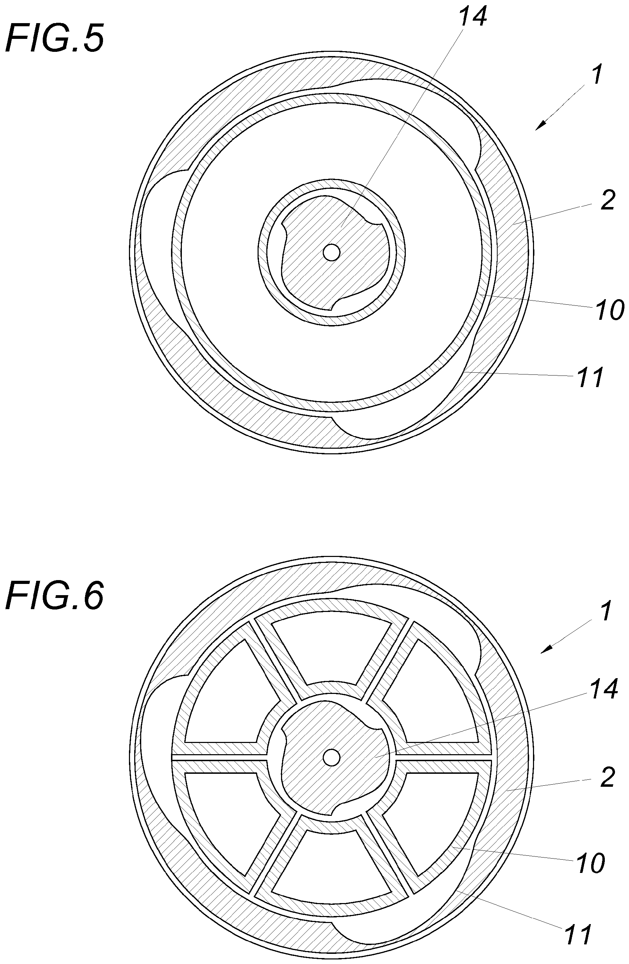

Zur Verbesserung der Strömungsverhältnisse, der Filtrierleistung und zur Vergrößerung der Filterfläche können zudem wenigstens zwei um die Behälterachse gegensinnig oder mit verschiedenen Drehgeschwindigkeiten antreibbare und Filterelemente 10 tragende Rotoren 6 vorgesehen sein. In dem Ausführungsbeispiel nach den Fig. 4, 5 und 6 ist beispielsweise ein die Filterelemente 10 tragender Rotor vorgesehen. Die Filterelemente sind in Fig. 4 kreisförmige Filterscheiben, in Fig. 5 eine ringförmige Filterscheibe und in Fig. 6 trapezförmige Filterscheiben 10. In dem Ausführungsbeispiel nach den Fig. 1 und 3 sind die Filterscheiben 10 auf zwei um die Behälterachse mit verschiedenen Drehzahlen antreibbaren, nicht näher dargestellten Rotoren befestigt. Die den einzelnen Kreisbahnen zugeordneten Filterelemente 10 können dabei mit unterschiedlichen Drehzahlen angetrieben werden.

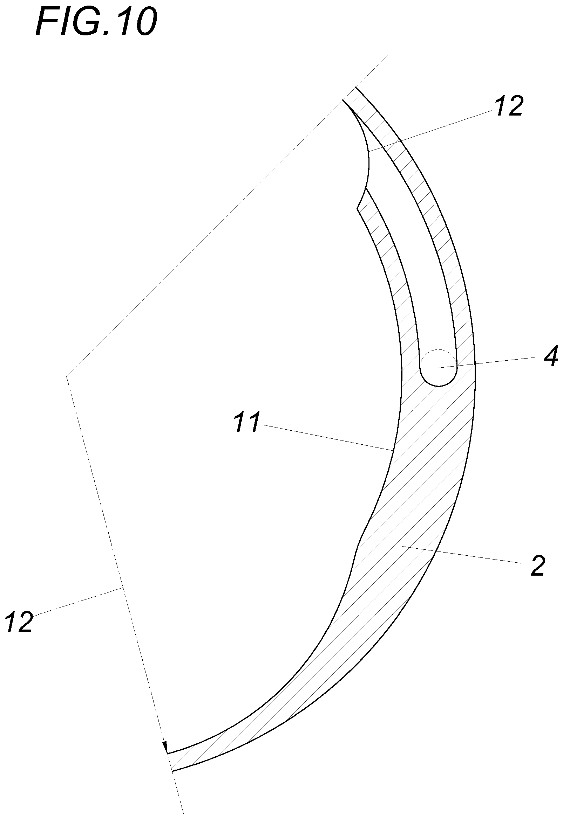

In Fig. 10 ist eine besonders vorteilhafte Anordnung für einen Behälterauslass dargestellt, wobei der Behälterauslass 4 eine im Behälterumfangsmantel 11 im Bereich der Ausbauchung angeordnete Auslassöffnung 12 umfasst, die in Behälterumfangsrichtung weisend an die Ausbauchung anschließt.

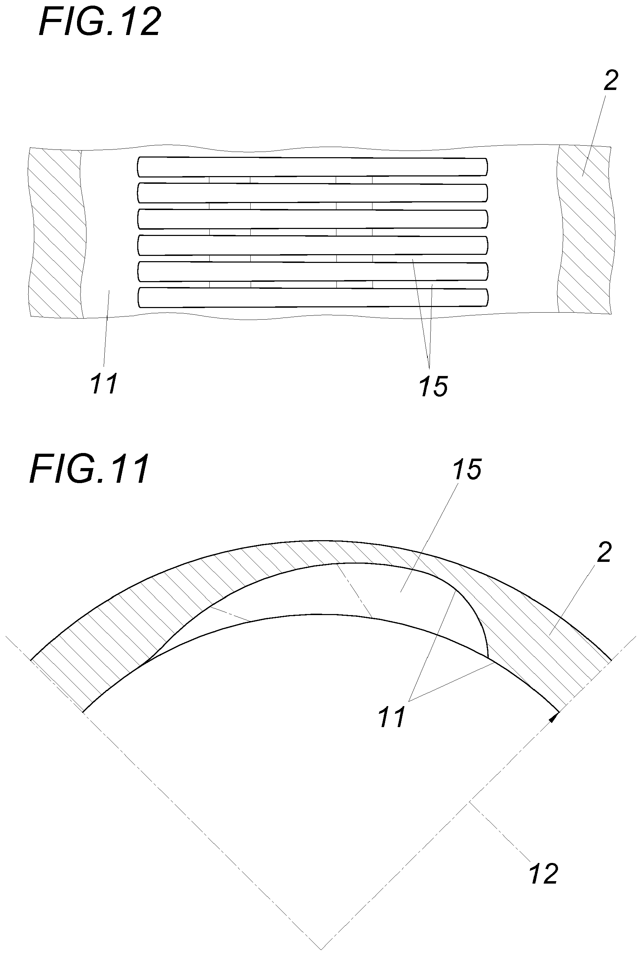

Zudem können am Behälterumfang der Ausbuchtung zugeordnete und in Behälterumfangsrichtung ausgerichtete und sich zumindest über einen Teil der Ausbauchung erstreckende Leiteinrichtungen 15 zugehören, die unerwünschte Querströmungen im Behälter zu unterbinden helfen. In Fig. 11 erstrecken sich diese Leiteinrichtungen 15 über die gesamte Ausbauchungslänge. Allerdings ist auch strichpunktiert angedeutet, dass verschiedene Leiteinrichtungslängen, insbesondere mittellange oder kurze, vorgesehen sein können.

Zur Maximierung der Filterfläche sind die Filterelemente 10 in dem Ausführungsbeispiel nach den Fig. 1, 3 und 6 trapezförmige Scheiben. Die Scheiben umfassen Dränageleitungen ausbildende und vorzugsweise diatomeenartig aufgebaute Scheibenseelen, die ober- und unterseitig mit einem Filterelement, insbesondere einer Folie, abgedeckt sind.

## Patentansprüche

1. Vorrichtung (1) zum Filtrieren von Flüssigkeiten, mit einem Behälter (2), Einrichtungen (3) zum Einleiten einer zu filtrierenden Flüssigkeit in den Behälter (2), einem Behälterauslass (4) für unfiltriert aus dem Behälter (2) abzuleitende Flüssigkeit und wenigstens einem um die Behälterachse (5) rotierend antreibbaren Rotor (6) mit einer in einer Stirnwand (7) gelagerten Hohlwelle (8) und einer daran befestigten Tragvorrichtung (9) für mit einem Freiraum zur Behälterachse (5) angeordnete oder um die eigene Achse drehende Filterelemente (10), deren inneres über die Tragvorrichtung (9) und die Hohlwelle (8) aus dem Behälter (2) als Ableitung für filtrierte Flüssigkeit ausmündet, wobei der Behälterinnenradius (12) der Innenwandung des Behälterumfangsmantels (11) in Behälterumfangsrichtung unter Ausbauchung der zylinderförmigen Innenwandung zwischen zwei Minima bis zu einem Maximum vergrößert ist, **dadurch gekennzeichnet, dass** der Behälterumfangsquerschnitt der Innenwandung des Behälterumfangsmantels (11) in wenigstens zwei, je eine Ausbauchung bildende Ringsegmente (S) unterteilt ist und sich der Behälterinnenradius (12) in Behälterumfangsrichtung jedes, Ringsegmentes (S) zwischen den beiden Minima bis zum Maximum vergrößert, wobei die Ausbauchungen der Innenwandung des Behälterumfangsmantels (11) die Flüssigkeit gegen die Filterelemente (10) leitende Leiteinrichtungen bilden und einen tragflächenprofilähnlichen Querschnitt aufweisen, wobei jedes Ringsegment (S) wenigstens drei Abschnitte aufweist, einen Beruhigungsabschnitt mit zumindest annähernd gleichem Behälterinnenradius (12), einen Impulsabschnitt, mit kleinem Krümmungsradius und mit einem gegen das Behälterinnere weisenden Endabschnitt, sowie einem zwischen Beruhigungsabschnitt und Impulsabschnitt liegenden Übergangsabschnitt und wobei im Bereich der Behälterachse (5) zur Verbesserung der Umspülung der Filterelemente (10) ein wenigstens eine Leiteinrichtung für das Fluid aufweisender Rotor (14) oder Stator angeordnet ist.

2. Vorrichtung nach Anspruch 1, **dadurch gekennzeichnet, dass** der Rotoraußenradius (15) der Rotoraußenwandung (16) in Rotorumfangsrichtung unter Einbuchtung der Außenwandung zwischen zwei Maxima bis zu einem Minimum verkleinert ist.

3. Vorrichtung nach Anspruch 1 oder 2, **dadurch gekennzeichnet, dass** der Rotor (14) über seinen Umfang in wenigstens zwei Segmente unterteilt ist und sich der Rotoraußenradius (15) in Rotorumfangsrichtung wenigstens eines, vorzugsweise jedes, Segmentes zwischen den beiden Maxima bis zum Minimum verkleinert.

4. Vorrichtung nach Anspruch 3, **dadurch gekennzeichnet, dass** jedes Segment wenigstens drei Abschnitte aufweist, einen Beruhigungsabschnitt mit zumindest annähernd gleichem Rotoraußenradius, einen Impulsabschnitt, mit kleinem Krümmungsradius und mit einem gegen das Behälteräußere weisenden Endabschnitt, sowie einen zwischen Beruhigungsabschnitt und Impulsabschnitt liegenden Übergangsabschnitt.

5. Vorrichtung nach einem der Ansprüche 1 bis 4, **dadurch gekennzeichnet, dass** wenigstens zwei um die Behälterachse gegensinnig oder mit verschiedenen Drehzahlen antreibbare und Filterelemente (10) tragende Rotoren (6) vorgesehen sind.

6. Vorrichtung nach einem der Ansprüche 1 bis 5, **dadurch gekennzeichnet, dass** der Behälterauslass (4) wenigstens eine im Behälterumfangsmantel (11) im Bereich der Ausbauchung angeordnete Auslassöffnung (12) umfasst.

7. Vorrichtung nach Anspruch 6, **dadurch gekennzeichnet, dass** die Auslassöffnung (12) in Behälterumfangsrichtung weisend an die Ausbauchung anschließt.

8. Vorrichtung nach einem der Ansprüche 1 bis 7, **dadurch gekennzeichnet, dass** der Ausbauchung wenigstens eine in Behälterumfangsrichtung ausgerichtete und sich über zumindest einen Teil der Ausbauchung erstreckende Leiteinrichtung (15) für das Fluid zugehört.

9. Vorrichtung nach einem der Ansprüche 1 bis 8, **dadurch gekennzeichnet, dass** die Filterelemente (10) trapezoid- oder keilförmige Scheiben sind deren Scheibenflächen die Filteroberfläche bilden, wobei der Abstand der eine innere und eine äußere Flanke miteinander verbindenden seitlichen Filterflanken der Filterelemente in der Filterebene von der äußeren zur inneren Flanke hin linear, gestuft oder gegebenenfalls potentiell abnimmt.

10. Vorrichtung nach Anspruch 9, **dadurch gekennzeichnet, dass** die Scheiben eine Drainageleitungen ausbildende diatomeenartig aufgebaute Scheibenseele umfasst, die ober- und unterseitig mit einem Filterelement, insbesondere einer Folie, abgedeckt ist.

## Claims

1. Apparatus (1) for filtering liquids, having a container (2), devices (3) for introducing a liquid to be filtered into the container (2), a container outlet (4) for liquid to be discharged unfiltered from the container (2), and at least one rotor (6), which can be driven to rotate around the container axis (5), having a hollow shaft (8) mounted in an end wall (7) and a support apparatus (9) fastened thereon for filter elements (10), which are arranged with a clearance to the container axis (5) or rotate around their own axis, and whose interior opens via the support apparatus (9) and the hollow shaft (8) out of the container (2) as the discharge for filtered liquid, wherein the container internal radius (12) of the inner wall of the container circumferential shell (11) is enlarged up to a maximum in the container circumferential direction while bulging the cylindrical inner wall between two minima, **characterised in that** the container circumferential cross-section of the inner wall of the container circumferential shell (11) is divided into at least two ring segments (S) forming a bulge in each case and the container internal radius (12) is enlarged up to the maximum in the container circumferential direction of each ring segment (S) between the two minima, wherein the bulges of the inner wall of the container circumferential shell (11) form guide devices guiding the liquid towards the filter elements (10) and have a cross-section similar to a wing profile, wherein each ring segment (S) has at least three sections, a calming section having an at least approximately equal container internal radius (12), a momentum section having a small radius of curvature and an end section pointing towards the container interior, and a transition section lying between the calming section and the momentum section, and wherein a rotor (14) or stator, which has at least one guide device for the fluid, is arranged in the region of the container axis (5) for improving the flow around the filter elements (10).

2. Apparatus as claimed in claim 1, **characterised in that** the rotor external radius (15) of the rotor outer wall (16) is decreased to a minimum in the rotor circumferential direction while indenting the outer wall between two maxima.

3. Apparatus as claimed in claim 1 or 2, **characterised in that** the rotor (14) is divided over its circumference into at least two segments and the rotor external radius (15) is decreased to the minimum in the rotor circumferential direction of at least one, preferably each, segment between the two maxima.

4. Apparatus as claimed in claim 3, **characterised in that** each segment has at least three sections, a calming section having an at least approximately equal rotor external radius, a momentum section having a small radius of curvature and an end section pointing towards the container exterior, and a transition section lying between the calming section and the momentum section.

5. Apparatus as claimed in any one of claims 1 to 4, **characterised in that** at least two rotors (6), which can be driven in opposite directions or at different speeds around the container axis and carry filter elements (10), are provided.

6. Apparatus as claimed in any one of claims 1 to 5, **characterised in that** the container outlet (4) comprises at least one outlet opening (12) arranged in the container circumferential shell (11) in the region of the bulge.

7. Apparatus as claimed in claim 6, **characterised in that** the outlet opening (12) adjoins the bulge pointing in the container circumferential direction.

8. Apparatus as claimed in any one of claims 1 to 7, **characterised in that** the bulge is associated with at least one guide device (15), which is aligned in the container circumferential direction and extends over at least a part of the bulge, for the fluid.

9. Apparatus as claimed in any one of claims 1 to 8, **characterised in that** the filter elements (10) are trapezoidal or wedge-shaped discs, whose disc surfaces form the filter surface, wherein the spacing of the lateral filter flanks of the filter elements, which connect an inner flank and an outer flank to one another, decreases in the filter plane from the outer flank towards the inner flank linearly, in steps, or possibly potentially.

10. Apparatus as claimed in claim 9, **characterised in that** the discs comprise a disc core, which forms drainage lines, is constructed like a diatom and is covered on the top and bottom sides using a filter element, in particular a film.

## Revendications

1. Dispositif (1) destiné à la filtration de liquides, avec un récipient (2), des équipements (3) pour introduire dans le récipient (2), un liquide à filtrer, un orifice de sortie (4) du récipient pour du liquide non filtré destiné à être évacué du récipient (2), et au moins un rotor (6), pouvant être entraîné en rotation autour de l'axe (5) du récipient avec un arbre creux (8), monté dans une paroi frontale (7), et un dispositif support (9) qui y est fixé, pour des éléments filtrants (10), disposés avec un espace libre par rapport à l'axe (5) du récipient ou tournant autour de leur propre axe, dont l'intérieur débouche du récipient (2), sous forme de dérivation pour du liquide filtré, en passant par le dispositif support (9) et l'arbre creux (8), le rayon intérieur (12) du récipient de la paroi intérieure (11) de l'enveloppe périphérique du récipient étant agrandi, dans la direction périphérique du récipient, grâce à l'évasement de la paroi intérieure en forme de cylindre entre deux minima et un maximum, **caractérisé en ce que** la section transversale périphérique du récipient de la paroi intérieure de l'enveloppe périphérique (11) du récipient est divisée en au moins deux segments annulaires (S) formant respectivement un évasement et **en ce que** le rayon intérieur (12) du récipient s'agrandit dans la direction périphérique du récipient de chaque segment annulaire (S) entre les deux minima et le maximum, les évasements de la paroi intérieure de l'enveloppe périphérique (11) du récipient formant des dispositifs de guidage conduisant le liquide contre les éléments filtrants (10) et présentant une section transversale similaire à un profil de surface support, chaque segment annulaire (S) présentant au moins trois sections, une section de contact avec au moins à peu près le même rayon intérieur (12) du récipient, une section d'impulsion, avec un rayon de courbure petit, et avec une section finale orientée contre l'intérieur du réservoir, ainsi qu'une section de passage placée entre la section de contact et la section d'impulsion, et un rotor (14) présentant au moins un dispositif de guidage pour le liquide ou stator étant disposé dans la zone de l'axe (5) du récipient pour améliorer le rinçage des éléments filtrants (10).

2. Dispositif selon la revendication 1, **caractérisé en ce que** le rayon extérieur (15) du rotor de la paroi extérieure (16) du rotor est diminué dans la direction périphérique du rotor, grâce au rétrécissement de la paroi extérieure entre deux maxima et un minimum.

3. Dispositif selon la revendication 1 ou 2, **caractérisé en ce que** le rotor (14) est divisé sur sa périphérie en au moins deux segments et **en ce que** le rayon extérieur (15) du rotor se rétrécit dans la direction périphérique du rotor au moins d'un, de préférence chaque segment, entre les deux maxima et le minimum.

4. Dispositif selon la revendication 3, **caractérisé en ce que** chaque segment présente au moins trois sections, une section de contact avec au moins à peu près le même rayon extérieur de rotor, une section d'impulsion, avec un rayon de courbure petit, et avec une section finale orientée contre l'extérieur du réservoir, ainsi qu'une section de passage placée entre la section de contact et la section d'impulsion.

5. Dispositif selon l'une des revendications 1 à 4, **caractérisé en ce qu'**au moins deux rotors (6) portant des éléments filtrants (10) et pouvant être entrainés autour de l'axe de récipient, en sens inverse ou à des nombres de tours différents, sont prévus.

6. Dispositif selon l'une des revendications 1 à 5, **caractérisé en ce que** l'orifice de sortie (4) du récipient comprend au moins une ouverture de sortie (12) disposée dans l'enveloppe périphérique (11) du récipient dans la zone de l'évasement.

7. Dispositif selon la revendication 6, **caractérisé en ce que** l'ouverture de sortie (12) est reliée, orienté dans la direction périphérique du récipient, au niveau de l'évasement.

8. Dispositif selon l'une des revendications 1 à 7, **caractérisé en ce qu'**au moins un dispositif de guidage (15), pour le liquide, s'étendant au moins au-dessus d'une partie de l'évasement, et orienté dans la direction périphérique du récipient, appartient à l'évasement.

9. Dispositif selon l'une des revendications 1 à 8, **caractérisé en ce que** les éléments filtrants (10) sont des disques cunéiformes ou trapézoïdaux, dont les faces de disque forment la surface de filtre, l'espace des flancs de filtre, latéraux, reliant ensemble un flanc intérieur et un flanc extérieur, des éléments filtrants, décroissant dans le plan de filtre du flanc extérieur vers le flanc intérieur, de manière linéaire, graduellement ou le cas échéant, potentiellement.

10. Dispositif selon la revendication 9, **caractérisé en ce que** les disques comprennent un noyau de disque réalisé de type diatomée, formant des conduites de drainage, qui est recouvert, côté supérieur et côté inférieur, d'un élément filtrant, en particulier, un film.
